# EUROPÄISCHE PATENTSCHRIFT

(11) **EP 2 669 484 B1**
(45) Veröffentlichungstag und Bekanntmachung des Hinweises auf die Patenterteilung: **14.06.2017**
(21) Anmeldenummer: 13162050.2
(22) Anmeldetag: 03.04.2013
(51) Int. Cl.: F01N 3/20

(54) **Einspritzsystem, Abgasnachbehandlungseinrichtung**
Injection system, exhaust gas treatment device
Système d'injection, dispositif de post-traitement des gaz d'échappement

(30) Priorität: 29.05.2012 DE 102012208936
(43) Veröffentlichungstag der Anmeldung: 04.12.2013
(73) Patentinhaber: ROBERT BOSCH GMBH, 70442 Stuttgart (DE)
(72) Erfinder: Haeberer, Rainer, 75015 Bretten (DE)

(56) Entgegenhaltungen:
- EP-A1- 1 656 986
- DE-A1-102006 012 855
- DE-A1-102007 026 944
- DE-A1-102007 044 403
- DE-A1-102009 014 436

## Beschreibung

Ein Einspritzsystem zum dosierten Einspritzen einer Flüssigkeit, insbesondere eines flüssigen Abgasnachbehandlungsmittels für ein Kraftfahrzeug, mit einem Tank zur Aufbewahrung der Flüssigkeit, wobei der Tank nur teilweise mit der Flüssigkeit gefüllt ist, so dass in dem Tank ein Luftpuffer verbleibt, mit einem Dosiermodul und mit einer Fördereinrichtung, wobei die Fördereinrichtung mit dem Tank durch eine Saugleitung und mit dem Dosiermodul durch eine Förderleitung verbunden ist, um die Flüssigkeit von dem Tank zu dem Dosiermodul zu fördern, sowie mit einem Lüftungsventil zum Ein- und/oder Auslassen von Gas in das beziehungsweise aus dem Einspritzsystem.

Ferner betrifft die Erfindung eine Abgasnachbehandlungseinrichtung für ein Kraftfahrzeug, mit einem Einspritzsystem zum dosierten Einspritzen eines flüssigen Abgasnachbehandlungsmittels in das Abgas einer Brennkraftmaschine des Kraftfahrzeugs.

### Stand der Technik

Einspritzsysteme und Abgasnachbehandlungseinrichtungen der Eingangs genannten Art sind bekannt. Bei Kraftfahrzeugen mit Brennkraftmaschinen muss aufgrund der in den nächsten Jahren anstehenden verschärften Abgasgesetzgebung unter anderem der Schadstoff NOx reduziert werden. Eine häufig angewandte Methode ist als SCR-Verfahren (SCR=Selektive katalytische Reduktion) bekannt, bei dem der Schadstoff NOx unter Zuhilfenahme von flüssigem Abgasnachbehandlungsmittel beziehungsweise Reduktionsmittel zu Stickstoff und Wasser reduziert wird. Die Flüssigkeit wird dabei mittels einer Dosierpumpe aus einem Tank zu einem Dosierventil gefördert, das häufig als passives beziehungsweise druckgesteuertes Einspritzventil ausgebildet ist. Die Dosierpumpe misst die Einspritzmenge zu und baut in der Förderleitung zu dem Einspritzventil einen Druck auf. Übersteigt dieser Druck einen kritischen Druck, so öffnet das Einspritzventil. Die bekannten Einspritzsysteme sind mit dem Problem konfrontiert, dass flüssiges Abgasnachbehandlungsmittel, insbesondere Harnstoffhaltiges Abgasnachbehandlungsmittel, beim Phasensprung von einem flüssigen zu einem festen Zustand eine Volumenzunahme von etwa 10 % aufweisen und somit alle mit einem derartigen Abgasnachbehandlungsmittel betriebenen Einspritzsysteme in Bezug auf ihre Eisdruckfestigkeit optimiert werden müssen. Bei Einspritzsystemen mit einem betätigbaren Dosierventil, kann die Dosierpumpe in ihrer Wirkrichtung umgeschaltet und gleichzeitig das Dosierventil entfernt werden, so dass durch die Dosierpumpe ein Gas beziehungsweise Abgas in das Einspritzsystem eingebracht wird, so dass die Flüssigkeit wieder zurück in den Tank gedrängt wird. Somit sind die Komponenten des Einspritzsystems mit Luft gefüllt und die sich noch in den Komponenten befindlichen Restmengen an harnstoffhaltigem Abgasnachbehandlungsmittel können beim Gefrieren keinen Schaden anrichten. Bei druckgesteuerten Einspritzventilen, die selbsttätig öffnen und schließen, ist dies jedoch nicht möglich.

Aus der EP 2151 559 B1 geht ein Einspritzsystem der Eingangs genannten Art hervor, bei welchem dieses Problem dadurch umgangen werden soll, dass zwischen Dosierpumpe und Dosierventil ein Lüftungsventil zum Ein- und/oder Auslassen von Gas in das oder aus dem Einspritzsystem vorgesehen ist. Je nach Förderrichtung der Dosierpumpe und in Abhängigkeit des Schaltzustands des Lüftungsventils lässt sich dabei Gas in das Einspritzsystem einführen beziehungsweise das Einspritzsystem belüften, um die Eisdruckfestigkeit zu gewährleisten, und später wieder ausführen beziehungsweise entlüften, um das Einspritzsystem wieder mit dem flüssigen Abgasnachbehandlungsmittel zu füllen und die Funktionsfähigkeit des Einspritzsystems wieder zu gewährleisten. Durch das Lüftungsventil wird dabei Umgebungsluft in das Einspritzsystem eingebracht. Dadurch kann es im Einspritzsystem zu Kristallbildung kommen, die insbesondere bei empfindlichen Ventilen, mit engen Führungen und fein tolerierten Dichtsitzen zu Klemmen und/oder Undichtheiten führen kann. Klemmen die Ventile in Dichtstellung, so kann beim Wiederstart das Abgasnachbehandlungsmittel nicht die sich im System befindliche Luft vertreiben und somit auch nicht die Harnstoffkristalle wieder auflösen mit der Folge, dass das Ventil weiterhin klemmt. Darüber hinaus muss der Volumenaustausch der Frischluft über eine sich im Tank befindliche Lüftungsvorrichtung kompensiert werden. Darüber hinaus müsste das Einspritzsystem bei einem Entlüftungsvorgang durch das Lüftungsventil wieder entlüftet werden, wenn der Druck nicht ausreicht, um das druckgesteuerte Einspritzventil zu öffnen. Das würde auch dazu führen, dass Teile des Abgasnachbehandlungsmittels direkt in die Umgebung abgegeben werden würden, was vom Gesetzgeber nicht erlaubt ist.

Die Offenlegungsschrift DE 10 2007 044 403 A1 betrifft ein Einspritzsystem zum dosierten Einspritzen eines flüssigen Abgasnachbehandlungsmittels in ein Abgas einer Verbrennungsanlage. Das Einspritzsystem weist einen nur teilweise gefüllten Tank, in dem ein Luftpuffer verbleibt, ein Dosiermodul sowie eine Fördereinrichtung auf. Die Fördereinrichtung ist mit dem Tank durch eine Saugleitung und mit dem Dosiermodul durch eine Förderleitung verbunden. Zudem weist das Einspritzsystem ein Lüftungsventil auf, wobei das Lüftungsventil mit dem Tank durch eine Lüftungsleitung und mit der Saugleitung durch eine weitere Lüftungsleitung verbunden ist.

### Offenbarung der Erfindung

Das erfindungsgemäße Einspritzsystem mit den Merkmalen des Anspruchs 1 hat den Vorteil, dass sowohl eine Kristallbildung bei einem Belüftungsvorgang sowie ein Austreiben von Abgasnachbehandlungsmittel in die Umgebung bei einem Entlüftungsvorgang sicher verhindert wird. Hierzu ist erfindungsgemäß vorgesehen, dass das Lüftungsventil mit dem Tank durch eine Lüftungsleitung verbunden ist, die an dem Tank im Bereich des Luftpuffers angeschlossen ist. Der Tank ist dabei stets nur teilweise mit der Flüssigkeit beziehungsweise mit dem flüssigen Abgasnachbehandlungsmittel gefüllt, so dass stets ein Luftpuffer in dem Tank verbleibt. Dieser Luftpuffer wird erfindungsgemäß nun zum Belüften des Einspritzsystems genutzt. Die Lüftungsleitung ist dazu im Bereich des Luftpuffers an den Tank angeschlossen, so dass wenn das Lüftungsventil geöffnet wird, Luft aus dem Luftpuffer in das übrige Einspritzsystem eingebracht wird. Die Luft in dem Tank ist durch das flüssige Abgasnachbehandlungsmittel, das insbesondere als wässrige Harnstofflösung vorliegt, mit Ammoniak angereichert. Wird diese Luft in das Einspritzsystem eingebracht, bilden sich keine Kristalle an den Ventilen, so dass deren Funktionsfähigkeit nicht beeinträchtigt wird. Bei einem Entlüftungsvorgang wird die Luft durch die Lüftungsleitung direkt wieder zurück in den Tank gefördert, ohne in die Umgebung zu gelangen.

Bevorzugt ist die Lüftungsleitung im oberen Endbereich des Tanks angeschlossen. Der Luftpuffer wird sich stets oberhalb der Flüssigkeit befinden, so dass die Anordnung des Anschlusses der Lüftungsleitung an dem Tank im oberen Endbereich sinnvoll zur sicheren Entnahme der dort befindlichen Luft ist. Hierzu kann die Lüftungsleitung beispielsweise durch eine Seitenwand am oberen Ende des Tanks in den Tank münden.

Besonders bevorzugt ist die Lüftungsleitung jedoch an einer Tankdecke des Tanks angeschlossen, so dass die Lüftungsleitung von oben in den Tank mündet. Dadurch kann der Luftpuffer maximal ausgenutzt und ein Eindringen von Flüssigkeit beziehungsweise Abgasnachbehandlungsmittel in die Lüftungsleitung verhindert werden. Die Lüftungsleitung kann dazu beispielsweise an einem Tankdeckel des Tanks angeschlossen sein. Im Sinne der vorliegenden Anmeldung ist ein Anschließen oder ein Anschluss so zu verstehen, dass stets eine fluidtechnische Verbindung zwischen den miteinander verbundenen Komponenten direkt am Anschluss gebildet wird.

Erfindungsgemäß ist vorgesehen, dass das Dosiermodul mindestens ein druckgesteuertes Einspritzventil aufweist. Im Normalbetrieb gibt damit das Dosiermodul bei Erreichen eines entsprechenden kritischen Drucks das Abgasnachbehandlungsmittel in das Abgas der Brennkraftmaschine. Da das Lüftungsventil durch die Lüftungsleitung mit dem Tank verbunden ist, ist ein Entlüften des Einspritzsystems mittels des Dosiermoduls nicht notwendig. Daher kann auf eine aufwändige Ausbildung des Dosiermoduls als betätigbares Einspritzventil verzichtet werden.

Weiterhin ist nicht erfindungsgemäß vorgesehen, dass das Lüftungsventil durch eine weitere Lüftungsleitung mit der Förderleitung verbunden ist, wobei die Lüftungsleitung nahe zu dem Einspritzventil in die Förderleitung mündet. Die Lüftungsleitung mündet somit zwischen der Dosierpumpe und dem Einspritzventil in die Förderleitung. Dadurch muss nur ein kleiner Abschnitt des Einspritzsystems bei einem Belüftungsvorgang von Flüssigkeit befreit werden. Vorzugsweise mündet die Lüftungsleitung nahe zu dem Einspritzventil in die Förderleitung, so dass das eisdruckschädliche Volumen des Einspritzsystems besonders klein gehalten wird. Vorzugsweise ist in dem Einspritzsystem das Lüftungsventil nahe zu dem Einspritzventil angeordnet, so dass auch ein Beheizen der weiteren Lüftungsleitung nicht erforderlich ist. Wenn bauraumbedingt eine derart nahe Anordnung der Ventile beieinander nicht möglich ist, ist der weiteren Luftleitung vorzugsweise eine Heizeinrichtung zugeordnet. Die Lüftungsleitung zwischen dem Lüftungsventil und dem Tank benötigt keine Heizeinrichtung, da sie mit Ausnahme des Wiederstarts des Einspritzsystems nach einem Belüftungsvorgang nur mit Luft gefüllt ist. Bei sehr niedrigen Temperaturen kann die Lüftungsgüte durch eine Kürzung der Entlüftungszeit verringert werden, um zu gewährleisten, dass kein Abgasnachbehandlungsmittel in die Lüftungsleitung gelangt.

Erfindungsgemäß ist vorgesehen, dass in der Lüftungsleitung zwischen dem Lüftungsventil und dem Tank eine Luftpumpe, insbesondere ein Kompressor, vorgesehen ist. Hierdurch wird erreicht, dass ein Entlüftungsvorgang in kurzer Zeit durchgeführt und aufgrund des durch die Pumpe erzeugten Drucks ein sicheres Austreiben von flüssigem Nachbehandlungsmittel aus dem zu belüftenden Teil des Einspritzsystems gewährleistet werden kann. Das Lüftungsventil ist in diesem Fall auch als passives beziehungsweise druckgesteuertes Ventil ausgebildet, da mittels der Luftpumpe auf einfache Art und Weise ein ausreichend hoher Druck zum Öffnen des dann passiven Lüftungsventils eingestellt werden kann.

Erfindungsgemäß ist vorgesehen, dass das Lüftungsventil durch eine weitere Lüftungsleitung mit der Saugleitung verbunden ist. Dadurch führt der Be- und Entlüftungspfad durch die Fördereinrichtung hindurch, womit diese einen noch höheren Beitrag zum Ent- beziehungsweise Belüften des Einspritzsystems leisten kann.

Das erfindungsgemäße Abgasnachbehandlungssystem mit den Merkmalen des Anspruchs 5 zeichnet sich durch ein Einspritzsystem wie es obenstehend beschrieben wurde aus. Es ergeben sich hierdurch die oben bereits genannten Vorteile.

Im Folgenden soll die Erfindung anhand der Zeichnungen näher erläutert werden. Dazu zeigen:
- Figur 1: ein erstes (nicht erfindungsgemäßes) Ausführungsbeispiel einer Abgasnachbehandlungseinrichtung,
- Figur 2: ein zweites (nicht erfindungsgemäßes) Ausführungsbeispiel der Abgasnachbehandlungseinrichtung und
- Figur 3: ein drittes (erfindungsgemäßes) Ausführungsbeispiel der Abgasnachbehandlungseinrichtung, jeweils in einer vereinfachten Darstellung.

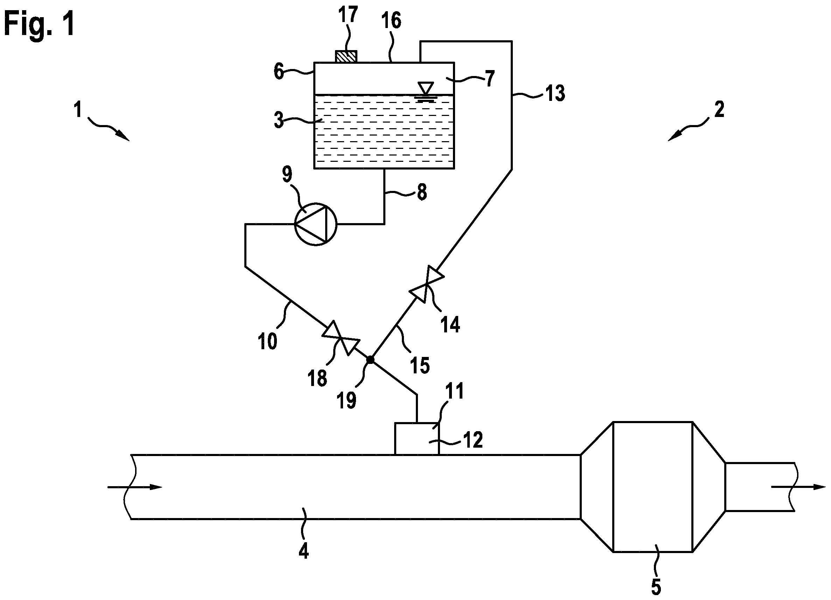

Figur 1 zeigt eine Abgasnachbehandlungseinrichtung 1 für ein hier nicht näher dargestelltes Kraftfahrzeug. Die Abgasnachbehandlungseinrichtung 1 weist ein Einspritzsystem 2 auf, mit welchem flüssiges Abgasnachbehandlungsmittel 3 in ein Abgasrohr 4 einspritzbar ist, wobei durch das Abgasrohr 4 das Abgas einer Brennkraftmaschine geleitet wird. Das Abgasnachbehandlungsmittel 3 liegt als wässrige Harnstofflösung vor, die in einem stromabwärts des Einspritzortes liegenden Katalysator 5 mit dem Abgas zusammenwirkt, um Schadstoffe des Abgases, insbesondere NOx-Bestandteile zu Stickstoff und Wasser zu reduzieren.

Das Einspritzsystem 2 weist einen Tank 6 auf, in welchem das flüssige Abgasnachbehandlungsmittel 3 aufbewahrt wird. Der Tank 6 ist nur teilweise mit dem Abgasnachbehandlungsmittel 3 gefüllt, so dass im oberen Endbereich ein Luftpuffer 7 in dem Tank 6 vorliegt. Am Boden des Tanks 3 führt eine Saugleitung 8 zu einer Fördereinrichtung 9, die insbesondere als Dosierpumpe ausgebildet ist. Das durch die Saugleitung 8 angesaugte Abgasnachbehandlungsmittel 3 fördert die Fördereinrichtung 9 durch eine Förderleitung 10 zu einem Dosiermodul 11, das an dem Abgasrohr 4 angeordnet und als passives beziehungsweise druckgesteuertes Einspritzventil 12 ausgebildet ist.

Von dem Tank 6 führt außerdem eine Lüftungsleitung 13 zu einem betätigbaren Lüftungsventil 14. Das Lüftungsventil 14 ist über eine weitere Lüftungsleitung 15 mit der Förderleitung 10 verbunden. An dem Tank 6 ist die Lüftungsleitung 13 an einer Tankdecke 16 des Tanks 6 angeschlossen, so dass sie von oben in den Tank 6 im Bereich des Luftpuffers 7 mündet. In der Tankdecke 16 ist außerdem ein Belüftungselement 17 vorgesehen, das eine Öffnung der Tankdecke 16 verschließt und luftdurchlässig, beispielsweise als Filter oder hydrophobe Membran, ausgebildet ist.

Von dem Tank 6 führt außerdem eine Lüftungsleitung 13 zu einem betätigbaren Lüftungsventil 14. Das Lüftungsventil 14 ist über eine weitere Lüftungsleitung 15 mit der Förderleitung 10 verbunden. An dem Tank 6 ist die Lüftungsleitung 13 an einer Tankdecke 16 des Tanks 6 angeschlossen, so dass sie von oben in den Tank 6 im Bereich des Luftpuffers 7 mündet. In der Tankdecke 16 ist außerdem ein Belüftungselement 17 vorgesehen, das eine Öffnung der Tankdecke 16 verschließt und luftdurchlässig, beispielsweise als Filter oder hydrophobe Membran, ausgebildet ist.

Ist die Fördereinrichtung 9 nicht als Dosierpumpe ausgebildet, so ist dem Einspritzventil 12 zweckmäßigerweise ein betätigbares Dosierventil 18 in der Förderleitung 10 vorgeschaltet. Die weitere Lüftungsleitung 15 mündet dann zweckmäßigerweise zwischen dem Dosierventil 18 und dem Einspritzventil 12 in die Förderleitung 10, wie in Figur 1 dargestellt.

Das dargestellte Einspritzsystem 2 hat den Vorteil, dass Luft, die zum Belüften des Einspritzsystems 2 zur Gewährleistung der Eisdruckfestigkeit genutzt werden soll, nicht aus der Umgebung oder aus dem Abgas der Brennkraftmaschine, sondern aus dem Tank 6 entnommen wird. Da sich in dem Tank 6 oberhalb des flüssigen Abgasnachbehandlungsmittels 3 stets der Luftpuffer 7 befindet, kann dessen Luft über die in ihrer Wirkrichtung umgepolte Fördereinrichtung 9 in das Einspritzsystem 2 eingesaugt werden. Das gesamte Luft- und Abgasnachbehandlungsmittelvolumen bleibt konstant, da keine Frischluft von außen in das Einspritzsystem 2 gelangt. Die sich in dem Luftpuffer 7 befindliche Luft ist bereits mit Ammoniak gesättigt und neigt deshalb zusammen mit dem Abgasnachbehandlungsmittel nicht zu Kristallbildung in den Lüftungsleitungen 13 und 15 oder in dem Lüftungsventil 14. Bei dem Belüftungsbetrieb bleibt das Einspritzventil 12 aufgrund des mittels der Fördereinrichtung 9 erzeugten Unterdrucks geschlossen.

Um auch das Einspritzventil 12 von Abgasnachbehandlungsmittel zu befreien beziehungsweise dessen Eisdruckfestigkeit zu gewährleisten, wird, nachdem Luft aus dem Tank 6 in das Einspritzsystem 2 in die Lüftungsleitungen 13, 15 und in die Förderleitung 10 eingebracht wurde, durch eine weitere Umkehr der Förderrichtung der Fördereinrichtung 9 und durch ein Schließen des Lüftungsventils 14 die in der Förderleitung 10 befindliche Luft komprimiert und die in der Förderleitung 10 zwischen der Mündungsstelle der weiteren Lüftungsleitung 15 und dem Einspritzventil 12 verbliebene Flüssigkeit durch das Einspritzventil 12 ausgetrieben.

Bei einer Entlüftung des Einspritzsystems 2, wenn dieses also wieder in Betrieb genommen werden soll, wird zunächst das Lüftungsventil 14 geöffnet. Auch das Dosierventil 18 ist geöffnet. Die Fördereinrichtung 9 fördert zunächst die sich im Einspritzsystem 2 befindliche Luft über die Luftleitungen 15 und 13 zurück in den Tank 6. Dabei kann auch in dem Einspritzsystem 2 verbliebenes Abgasnachbehandlungsmittel über die Luftleitungen zurück in den Tank gelangen. Das von der Fördereinrichtung 9 durch die Saugleitung 8 angesaugte und in die Förderleitung 10 geförderte Abgasnachbehandlungsmittel 3 gelangt ebenfalls über die Luftleitungen 15 und 13 in den Tank 6. Sobald dies geschieht, wird das Lüftungsventil 14 wieder geschlossen und der normale Dosierbetrieb des Einspritzsystems 2 kann beginnen.

Es ist vorteilhaft, wenn sich der Knotenpunkt 19, an welchem die weitere Lüftungsleitung 15 in die Förderleitung 10 mündet, in unmittelbarer Nähe des Einspritzventils 12 befindet. Dadurch kann das eisdruckschädliche Volumen des Einspritzventils 12 klein gehalten werden. Darüber hinaus ist es vorteilhaft, wenn das Lüftungsventil 14 nahe an dem Einspritzventil 12 angeordnet ist, so dass eine Beheizung der weiteren Lüftungsleitung 15 nicht notwendig ist. Ist bauraumbedingt eine entsprechend nahe Anordnung der Ventile beieinander nicht möglich, ist vorteilhafterweise eine entsprechende Heizeinrichtung der weiteren Luftleitung 15 zugeordnet. Der Luftleitung 13 kann prinzipiell auch eine Heizeinrichtung zugeordnet sein, dies ist jedoch in der Regel nicht notwendig, da die Luftleitung 13 in der Regel nur mit Luft befüllt ist. Nur bei einer Wiederinbetriebnahme des Einspritzsystems 2 ist die Luftleitung 13 kurzzeitig mit zurückbefördertem Abgasnachbehandlungsmittel gefüllt. Notfalls kann bei sehr tiefen Temperaturen einer Verringerung der Entlüftungsgüte durch eine Kürzung der Entlüftungszeit in Kauf genommen werden, so dass mit Sicherheit kein Abgasnachbehandlungsmittel in die Luftleitung 13 gelangt.

Lässt man die Entlüftungsproblematik beiseite, so kann das Lüftungsventil 14 auch als passives beziehungsweise druckgesteuertes Ventil ausgebildet sein, das einen geringen Öffnungsdruck aufweist, so dass es durch Ansaugen von Luft mühelos öffnen kann. Ein solches System mit einem druckgesteuerten Ventil wird erfindungsgemäss im dritten Ausführungsbeispiel gezeigt.

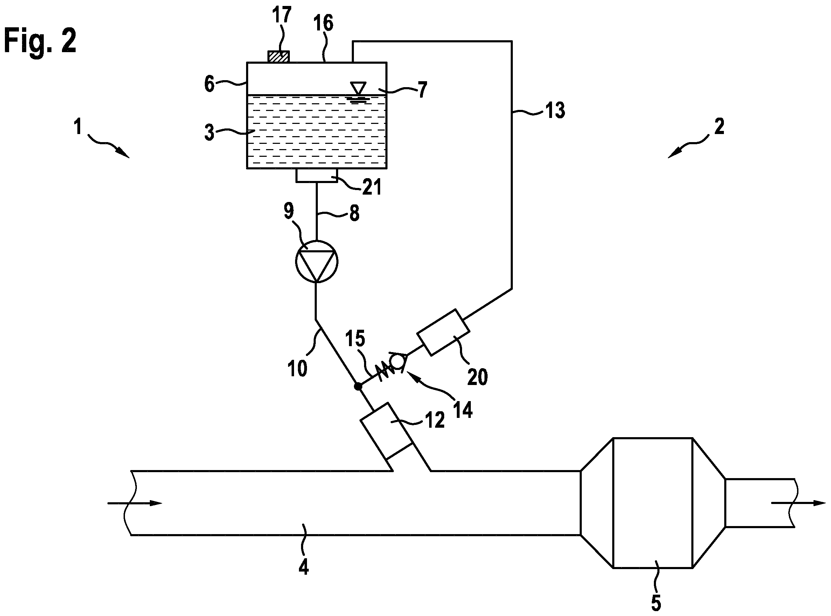

Figur 2 zeigt ein zweites nicht erfindungsgemässes Ausführungsbeispiel der Abgasnachbehandlungseinrichtung 1. Aus Figur 1 bereits bekannte Elemente sind mit den gleichen Bezugszeichen versehen, so dass insofern auf die oben stehende Beschreibung verwiesen wird. Es soll im Folgenden im Wesentlichen nur auf die Unterschiede eingegangen werden.

Bei dem zweiten Ausführungsbeispiel ist vorgesehen, dass das Lüftungsventil 14 als druckgesteuertes beziehungsweise als passives Rückschlagventil ausgebildet ist, dem in der Lüftungsleitung 13 eine Luftpumpe 20, die als Luftkompressor ausgebildet ist, vorgeschaltet ist. Mittels der Luftpumpe 20 kann die Luft aus dem Luftpuffer 7 unabhängig von dem Betrieb der Fördereinrichtung 9 in das Einspritzsystem 2, insbesondere in die Förderleitung 10 eingebracht werden, um diese zu belüften. Darüber hinaus kann der Öffnungsdruck des Lüftungsventils 14 erhöht werden, da nunmehr ein entsprechend hoher Öffnungsdruck durch die Luftpumpe 20 bereitgestellt werden kann.

Bei einer Wiederinbetriebnahme des Einspritzsystems 2, wenn die Fördereinrichtung 9 wieder Abgasnachbehandlungsmittel 3 durch die Förderleitung 10 zu dem Einspritzventil 12 fördert, bleibt das Lüftungsventil 14 geschlossen, so dass kein Abgasnachbehandlungsmittel durch die Lüftungsleitungen 15 und 13 zurück in den Tank 6 gelangt.

Wie in Figur 2 gezeigt, kann zwischen dem Tank 6 und der Saugleitung 8 darüber hinaus auch ein Filter 21 zwischengeschaltet sein.

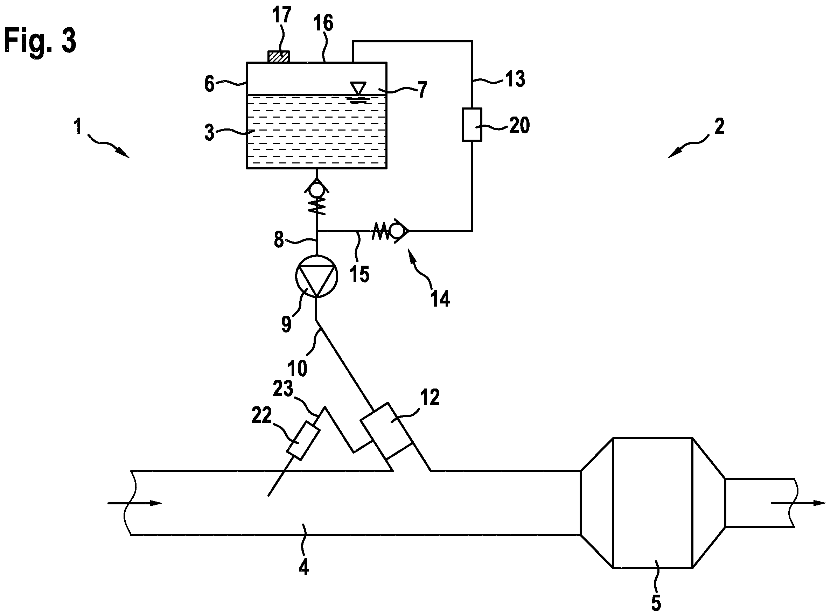

Figur 3 zeigt erfindungsgemässes weiteres Ausführungsbeispiel der Abgasnachbehandlungseinrichtung 1, wobei aus den vorherigen Figuren bereits bekannte Elemente mit den gleichen Bezugszeichen versehen sind, so dass insofern auf die obenstehende Beschreibung verwiesen wird.

Im Unterschied zu dem vorhergehenden Ausführungsbeispiel ist nunmehr vorgesehen, dass die weitere Lüftungsleitung 15 in die Saugleitung 8 mündet. Dadurch lässt sich ein größerer Teil des Einspritzsystems 2 mittels der Luftpumpe 20 belüften. Das Belüftungselement 17 des Tanks 6 gewährleistet, dass stets ausreichend Luft in dem Luftpuffer 7 zur Verfügung steht. Auch hier wird die Luft aus dem Luftpuffer 7 entnommen, so dass eine Kristallbildung in dem Einspritzsystem 2, insbesondere an den Ventilen, vermieden wird.

Weiterhin ist bei dem vorliegenden Ausführungsbeispiel ein zusätzliches betätigbares Ventil 22 vorgesehen, das in einer Luftleitung 23 angeordnet ist, die von dem Abgasrohr 4 stromaufwärts der Einspritzstelle des Einspritzventils 12 zu dem Einspritzventil 12 führt. Durch Öffnen des Ventils 22 kann dem Einspritzventil 12 zusätzlich Abgas zugeführt werden, um in kurzer Zeit eine Eisdruckfestigkeit des Einspritzventils 12 zu erreichen.

## Patentansprüche

1. Einspritzsystem (2) zum dosierten Einspritzen einer Flüssigkeit, insbesondere eines flüssigen Abgasnachbehandlungsmittels (3), mit einem Tank (6) zur Aufbewahrung der Flüssigkeit, wobei der Tank (6) nur teilweise mit der Flüssigkeit gefüllt ist, so dass in dem Tank (6) ein Luftpuffer (7) verbleibt, mit einem Dosierventil (18) und mit einer Fördereinrichtung (9), wobei die Fördereinrichtung (9) mit dem Tank (6) durch eine Saugleitung (8) und mit dem Dosierventil (18) durch eine Förderleitung (10) verbunden ist, um die Flüssigkeit von dem Tank (6) zu dem Dosierventil (18) zu fördern, sowie mit einem Lüftungsventil (14) zum Ein- und/oder Auslassen von Gas in das oder aus dem Einspritzsystem (2), wobei das Lüftungsventil (14) mit dem Tank (6) durch eine Lüftungsleitung (13) verbunden ist, die an dem Tank (6) im Bereich des Luftpolsters (7) angeschlossen ist, und wobei das Lüftungsventil (14) durch eine weitere Lüftungsleitung (15) mit der Saugleitung (8) verbunden ist. **dadurch gekennzeichnet, dass** das Dosiermodul (11) mindestens ein druckgesteuertes Einspritzventil (12) aufweist, und wobei in der Lüftungsleitung (13) zwischen dem Lüftungsventil (14) und dem Tank (6) eine Luftpumpe (20) vorgesehen ist, wobei das Lüftungsventil (14) als druckgesteuertes Lüftungsventil (14) ausgebildet ist.

2. Einspritzsystem (2) nach Anspruch 1, **dadurch gekennzeichnet, dass** die Lüftungsleitung (13) im oberen Endbereich des Tanks (6) angeschlossen ist.

3. Einspritzsystem (2) nach einem der vorhergehenden Ansprüche, **dadurch gekennzeichnet, dass** die Lüftungsleitung (13) an einer Tankdecke (16) des Tanks (6) angeschlossen ist.

4. Einspritzsystem (2) nach einem der vorhergehenden Ansprüche, **dadurch gekennzeichnet, dass** die Luftpumpe (20) ein Kompressor ist.

5. Abgasnachbehandlungseinrichtung (1) für ein Kraftfahrzeug, zum Nachbehandeln eines Abgases einer Brennkraftmaschine des Kraftfahrzeugs, mit einem Einspritzsystem (2) zum dosierten Einspritzen eines flüssigen Abgasnachbehandlungsmittels (3) in das Abgas, **gekennzeichnet durch** die Ausbildung des Einspritzsystems (2) nach einem oder mehreren der vorhergehenden Ansprüche.

## Claims

1. Injection system (2) for the dosed injection of a liquid, in particular of a liquid exhaust-gas aftertreatment medium (3), having a tank (6) for storing the liquid, wherein the tank (6) is only partially filled with the liquid, such that an air buffer (7) remains in the tank (6), having a dosing valve (18) and having a delivery device (9), wherein the delivery device (9) is connected to the tank (6) by means of a suction line (8) and to the dosing valve (18) by means of a delivery line (10) for the purposes of delivering the liquid from the tank (6) to the dosing valve (18), and having a ventilation valve (14) for the admission and/or discharge of gas into or out of the injection system (2), wherein the ventilation valve (14) is connected to the tank (6) by means of a ventilation line (13) which is connected to the tank (6) in the region of the air cushion (7), and wherein the ventilation valve (14) is connected by means of a further ventilation line (15) to the suction line (8), **characterized in that** the dosing module (11) has at least one pressure-controlled injection valve (12), and wherein an air pump (20) is provided in the ventilation line (13) between the ventilation valve (14) and the tank (6), wherein the ventilation valve (14) is in the form of a pressure-controlled ventilation valve (14).

2. Injection system (2) according to Claim 1, **characterized in that** the ventilation line (13) is connected in the upper end region of the tank (6).

3. Injection system (2) according to one of the preceding claims, **characterized in that** the ventilation line (13) is connected to a tank ceiling (16) of the tank (6).

4. Injection system (2) according to one of the preceding claims, **characterized in that** the air pump (20) is a compressor.

5. Exhaust-gas aftertreatment device (1) for a motor vehicle, for the aftertreatment of an exhaust gas of an internal combustion engine of the motor vehicle, having an injection system (2) for the dosed injection of a liquid exhaust-gas aftertreatment medium (3) into the exhaust gas, **characterized by** the embodiment of the injection system (2) according to one or more of the preceding claims.

## Revendications

1. Système d'injection (2) pour l'injection dosée d'un liquide, en particulier d'un agent de post-traitement des gaz d'échappement fluide (3), comprenant un réservoir (6) pour stocker le liquide, le réservoir (6) étant rempli au moins en partie avec le liquide, de telle sorte qu'un tampon d'air (7) subsiste dans le réservoir (6), comprenant une soupape de dosage (18) et un dispositif de transport (9), le dispositif de transport (9) étant raccordé au réservoir (6) par une conduite d'aspiration (8) et étant raccordé à la soupape de dosage (18) par une conduite de transport (10), afin de transporter le liquide du réservoir (6) à la soupape de dosage (18), et comprenant une soupape de ventilation (14) pour introduire et/ou évacuer du gaz dans le système d'injection (2) ou hors de celui-ci, la soupape de ventilation (14) étant raccordée au réservoir (6) par une conduite de ventilation (13), qui est raccordée au réservoir (6) dans la région du tampon d'air (7), et la soupape de ventilation (14) étant raccordée à la conduite d'aspiration (8) par une conduite de ventilation supplémentaire (15), **caractérisé en ce que** le module de dosage (11) présente au moins une soupape d'injection (12) commandée en pression, et une pompe à air (20) étant prévue dans la conduite de ventilation (13) entre la soupape de ventilation (14) et le réservoir (6), la soupape de ventilation (14) étant réalisée sous forme de soupape de ventilation commandée en pression.

2. Système d'injection (2) selon la revendication 1, **caractérisé en ce que** la conduite de ventilation (13) est raccordée dans la région d'extrémité supérieure du réservoir (6).

3. Système d'injection (2) selon l'une quelconque des revendications précédentes, **caractérisé en ce que** la conduite de ventilation (13) est raccordée à un couvercle de réservoir (16) du réservoir (6).

4. Système d'injection (2) selon l'une quelconque des revendications précédentes, **caractérisé en ce que** la pompe à air (20) est un compresseur.

5. Dispositif de post-traitement des gaz d'échappement (1) pour un véhicule automobile, pour le post-traitement d'un gaz d'échappement d'un moteur à combustion interne du véhicule automobile, comprenant un système d'injection (2) pour l'injection dosée d'un agent de post-traitement des gaz d'échappement fluide (3) dans le gaz d'échappement, **caractérisé par** la réalisation d'un système d'injection (2) selon l'une quelconque ou plusieurs des revendications précédentes.
